# EUROPÄISCHE PATENTSCHRIFT

(11) **EP 2 486 289 B1**
(45) Veröffentlichungstag und Bekanntmachung des Hinweises auf die Patenterteilung: **23.07.2014**
(21) Anmeldenummer: 10765757.9
(22) Anmeldetag: 05.10.2010
(51) Int. Cl.: F16B 37/04

(54) **VERBINDUNGSELEMENT, VERBINDUNG, SYSTEM SOWIE VERFAHREN**
CONNECTING ELEMENT, CONNECTION, SYSTEM, AND METHOD
ÉLÉMENT DE LIAISON, LIAISON, SYSTÈME ET PROCÉDÉ

(30) Priorität: 05.10.2009 DE 102009048195; 22.01.2010 DE 102010005571
(43) Veröffentlichungstag der Anmeldung: 15.08.2012
(73) Patentinhaber: Flaig, Hartmut, 78554 Aldingen (DE)
(72) Erfinder: HOLSCHER, Winfried K. W., 78234 Engen (DE)
(74) Vertreter: Wagner, Kilian
(86) Internationale Anmeldenummer: PCT/EP2010/006060
(87) Internationale Veröffentlichungsnummer: WO 2011/042150

(56) Entgegenhaltungen:
- DE-U1-202005 011 234
- US-A1- 2004 001 745

## Beschreibung

Die Erfindung betrifft ein Verbindungselement, insbesondere zum Festlegen an einer äußeren Schicht eines, vorzugsweise eine Metallschaumschicht umfassenden, Verbundmaterials, mit einer Anlageseite zur Anlage an der äußeren Schicht des Verbundmaterials und mit einem eine Innengewindeöffnung zum lösbaren Festlegen eines Durchführgelenkwerkzeugs aufweisenden Körper, wobei eine Längenerstreckung des Körpers größer ist als seine Breitenerstreckung und auch größer ist als seine entlang einer Längsachse der Innengewindeöffnung orientierte Dickenerstreckung, um durch eine Durchgangsöffnung in dem Verbundmaterial in Richtung seiner Längenerstreckung durchführbar zu sein. Ferner betrifft die Erfindung eine Verbindung aus einem eine äußere Schicht umfassenden Verbundmaterial und einem derartigen Verbindungselement. Darüber hinaus betrifft die Erfindung ein System, umfassend ein derartiges Verbindungselement und ein Durchführgelenkwerkzeug zum Durchführen des Verbindungselementes durch eine Durchgangsöffnung in einem Verbundmaterial. Zusätzlich betrifft die Erfindung ein Verfahren zum Herstellen einer Verbindung aus Verbindungselement und Verbundmaterial, also ein Verfahren zum Festlegen eines Verbindungselementes an einem eine Durchgangsöffnung und eine äußere Schicht aufweisenden Verbundmaterial.

Aus der DE 20 2005 011 234 U1 ist ein Verbindungselement zum Festlegen in einem Innenraum (Hohlraum) eines Profils bekannt. Das Befestigungsprinzip des bekannten Verbindungselementes beruht darauf, dass Material des Profils von zwei Anformungen des Verbindungselementes beim Anziehen des Verbindungselementes gegen die Innenseite des Profils nach radial innen in eine Einkerbung in einem dicken, nicht radial deformierbaren Formrand verdrängt wird, wodurch eine formschlüssige Verbindung zwischen dem Verbindungselement und dem Profil hergestellt wird. Das bekannte Verbindungselement hat sich bewährt, eignet sich jedoch nicht zur Verwendung von mindestens eine äußere Schicht und eine Metallschaumschicht, beispielsweise eine Aluminiumschaumschicht aufweisendem Leichtbau-Verbundmaterial. Wird nämlich das bekannte Verbindungselement gegen die äußere Schicht des Verbundmaterials gezogen, um Material der äußeren Schicht nach radial innen in die Formrandeinkerbung zu verdrängen, gibt die Metallschaumschicht aufgrund der notwendigen Zugkraftbelastung nach, und das Verbundmaterial wird eingedellt, d.h. unerwünscht in Zugrichtung deformiert, ohne dass (ausreichend) Material nach radial innen verdrängt wird, um eine sichere formschlüssige Verbindung zu gewährleisten.

Die US 2004/0001745 A1 beschreibt ein Verbindungselement, welches in Richtung seiner Längserstreckung durch eine Durchgangsöffnung in einem Bauteil hindurchgeführt werden kann, um auf der Rückseite um 90° gedreht zu werden, um dann den Rand der Durchgangsöffnung von der Rückseite her zu überragen. Das bekannte Verbindungselement benötigt die Zugänglichkeit des die Durchgangsöffnung aufweisenden Bauteils von zwei unterschiedlichen Seiten her, was bei Anwendungen für Durchsteckmuttern nicht gegeben ist.

Ausgehend von dem vorgenannten Stand der Technik liegt der Erfindung die Aufgabe zugrunde, ein zur Verwendung mit Verbundmaterial, insbesondere einem Metallschaum-Verbundmaterial, anzugeben. Darüber hinaus soll eine entsprechend verbesserte Verbindung zwischen einem derartigen Verbindungselement und einem eine Metallschaumschicht umfassenden Verbundmaterial sowie ein System zur Herstellung einer solchen Verbindung und ein Verfahren zum Herstellen einer solchen Verbindung angegeben werden.

Diese Aufgabe wird bei einem gattungsgemäßen Verbindungselement dadurch gelöst, dass auf der Anlageseite des Körpers mindestens zwei in Umfangsrichtung beabstandet angeordnete, durch Beaufschlagen mit einer Radialkraftkomponente nach radial außen plastisch deformierbare Formschlussmittel zum Hintergreifen der äußeren Schicht des Verbundmaterials auf der von dem Körper des Verbindungselementes abgewandten Seite der äußeren Schicht vorgesehen sind. Hinsichtlich der Verbindung wird die Aufgabe mit den Merkmalen des Anspruch 1 und hinsichtlich des Systems mit den Merkmalen des Anspruchs 12 gelöst. Vorteilhafte Weiterbildungen der Erfindung sind in den Unteransprüchen angebeben, In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt die Erkenntnis zugrunde, dass durch die zur Verdrängung von äußerem Schichtmaterial nach radial innen benötigte bzw. aufzuwendende Zugkraft bei bekannten Verbindungen dazu führen muss, dass sich das vergleichsweise weiche Verbundmaterial in unzulässiger Weise in Zugrichtung deformiert. In Abkehr des bekannten Verbindungskonzeptes schlägt die Erfindung zur Vermeidung der unzulässigen Deformation vor, nicht Material der äußeren Schicht zur Herstellung der formschlüssigen Verbindung zu deformieren, sondern stattdessen in Richtung der Durchgangsöffnung vorstehende Formschlussmittel des Verbindungselementes, derart, dass die Formschlussmittel im Innern des Verbundmaterials die äußere Schicht des Verbundmaterials, die vorzugsweise eine höhere Festigkeit aufweist als eine innere, insbesondere als Metallschaumschicht ausgebildete Schicht des Verbundmaterials, hintergreifen, um somit Abschnitte der äußeren Schicht sandwichartig zwischen dem Körper des Verbindungselementes und den Formschlussmitteln- aufzunehmen, wodurch ein sicherer Formschluss gewährleistet ist, der vorzugsweise eine drehfeste Fixierung des Verbindungselementes am Verbundmaterial sicherstellt. Anders ausgedrückt werden mittels einer Radialkraftkomponente nach radial außen plastisch deformierbare Formschlussmittel am Körper vorgesehen, mit dem Ziel, diese durch Kraftbeaufschlagung zur Herstellung eines Formschlusses nach außen, vorzugsweise in eine Weichmaterialschicht, insbesondere eine Metallschaumschicht des Verbundmaterials, hinein zu verformen. Das Vorsehen von nach außen deformierbaren Formschlussmitteln ermöglicht es, auf das im Stand der Technik zur Deformation von Schichtmaterial notwendige starke axiale Anziehen in Richtung des Verbundmaterials zu verzichten und stattdessen durch Axialkraftbeaufschlagung in Einbringungsrichtung die Formschlussmittel nach außen zu deformieren. Hierzu sollten an den Druckbeaufschlagungsmitteln, insbesondere an einer Druckhülse und/oder an den Formschlussmitteln, eine entsprechende, die Axialkraftbeaufschlagung in die notwendige Radialkraftkomponente umwandelnde Geometrie vorgesehen werden.

Erfindungsgemäß ist vorgesehen, dass die Formschlussmittel eine Aufnahmeaussparung aufweisen, die vorzugsweise in Richtung der Längserstreckung des Verbindungselementes orientiert ist, um ein Umbiegen eines so genannten Durchführgelenkwerkzeuges, um beispielsweise 90° zu ermöglichen, um ein Durchführen des Verbindungselementes mit umgelegtem Durchführgelenkwerkzeug durch die Durchgangsöffnung, insbesondere im Verbundmaterial sicher zu stellen. Ganz besonders bevorzugt sind zwei ineinander fluchtende, vorzugsweise beide in Längsrichtung des Verbindungselementes orientierte Aussparungen in den Formschlussmitteln zu vorgenanntem Zweck vorgesehen.

Das Verbindungselement muss so ausgebildet sein, dass es in Richtung seiner Längserstreckung durch eine Durchgangsöffnung im Verbundmaterial durchführbar ist, jedoch nach Drehen um 90° den Rand der Durchgangsöffnung an zwei Seiten überragt. Besonders bevorzugt ist es, wenn der Körper des Verbindungselementes eine größere Längen- als Breitenerstreckung aufweist. Bevorzugt ist seine Längenerstreckung und/oder seine Breitenerstreckung größer als seine Dickenerstreckung, die in Richtung der Längserstreckung (Axialerstreckung) der Innengewindeöffnung orientiert ist. Besonders zweckmäßig ist es, wenn der Körper eine zumindest näherungsweise rechteckige Umfangskontur aufweist. Ganz besonders zweckmäßig ist es, wenn die Dickenerstreckung des Körpers deutlich geringer ist als der Durchmesser der Durchgangsöffnung im Verbundmaterial. Ganz besonders bevorzugt ist die Dickenerstreckung kleiner als der oder entspricht dem Radius, d.h. dem halben Durchmesser der, bevorzugt kreisförmig konturierten, Durchgangsöffnung. Besonders zweckmäßig erscheint es, wenn der Körper im Querschnitt zumindest näherungsweise halbkreisförmig konturiert ist.

Im Hinblick auf die Ausgestaltung der Formschlussmittel gibt es unterschiedliche Möglichkeiten. Diese können beispielsweise als Ringfortsatz ausgebildet sein, der die Anlagefläche des Körpers in Richtung seiner dicken Erstreckung, das heißt senkrecht zur Längs- und Breitenerstreckung überragt, wobei der Ringfortsatz mindestens zwei in Umfangsrichtung angeordnete Abschnitte aufweist, die durch Beaufschlagen mit einer Radialkraft nach radial außen umgebogen werden können, derart, dass sie die äußere Schicht des Verbundsmaterials hintergreifen. Dabei gibt es grundsätzlich zwei Alternativen zur Beabstandung dieser umbiegbaren Abschnitte. Gemäß einer ersten Alternative sind die Abschnitte voneinander beabstandet durch das Vorsehen von Freiflächen zwischen diesen und anders ausgedrückt wird der Ringfortsatz also gebildet von mehreren in Umfangsrichtung voneinander beabstandeten Abschnitten, die nach radial außen unbiegbar sind. Gemäß einer zweiten Alternative sind die Abschnitte vor dem Umbiegen einteilig miteinander ausgebildet und es ist sich zwischen mindestens zwei in Umfangsrichtung nebeneinander angeordneten Abschnitten ein Materialschwächungsbereich, beispielsweise durch das Vorsehen einer inneren-/und äußeren Einkerbung vorgesehen, der dafür Sorge trägt, dass die Abschnitte beim radialen Umbiegen an einer definierten Stelle bzw. an einem definierten Bereich aufreißen bzw. voneinander getrennt werden.

Im Hinblick auf die Ausgestaltung der Formschlussmittel gibt es unterschiedliche Möglichkeiten. Diese können beispielsweise als, insbesondere eine hohlkreiszylindrische Hüllkontur aufweisender, Ringfortsatz ausgebildet sein, der die Anlagefläche (Anlageseite) des Körpers in Richtung seiner Dickenerstreckung, d.h. senkrecht zur Längs- und Breitenerstreckung überragt, wobei der Ringfortsatz mindestens zwei in Umfangsrichtung angeordnete Abschnitte aufweist, die durch Beaufschlagen mit einer Radialkraft nach radial außen umgebogen werden können, derart, dass sie die äußere Schicht des Verbundmaterials hintergreifen. Dabei gibt es grundsätzlich zwei Alternativen zur Beabstandung dieser umbiegbaren Abschnitte. Gemäß einer ersten Alternative sind die Abschnitte voneinander beabstandet durch das Vorsehen einer Freifläche, d.h. einer Aussparung, zwischen diesen. Anders ausgedrückt wird der Ringfortsatz also gebildet von mehreren in Umfangsrichtung voneinander über mindestens eine Aussparung beabstandeten Abschnitten, die nach radial außen umbiegbar sind. Zwischen mindestens zwei Abschnitten befindet sich also eine sich in Umfangsrichtung erstreckende Aussparung. Gemäß einer zweiten Alternative sind die Abschnitte vor dem Umbiegen einteilig miteinander ausgebildet und es ist zwischen mindestens zwei in Umfangsrichtung nebeneinander angeordneten Abschnitten ein Materialschwächungsbereich, beispielsweise durch das Vorsehen einer inneren und/oder äußeren Einkerbung vorgesehen, der dafür Sorge trägt, dass die Abschnitte beim radialen Umbiegen an einer definierten Stelle bzw. in einem definierten Bereich (Sollbruchbereich) aufreißen bzw. voneinander getrennt werden.

Anstelle des Vorsehens eines umfangsgeschlossenen, Materialschwächungsbereiche aufweisenden, oder von in Umfangsrichtung über Aussparungen voneinander beabstandeten Abschnitten gebildeten, bevorzugt in einer Draufsicht kreisringförmig konturierten, Ringfortsatzes ist es möglich, mindestens einen, insbesondere in einer Draufsicht teilkreisförmig konturierten, d.h. eine teilkreiszylindrische Hüllkontur aufweisenden Teilringfortsatz vorzusehen, der sich in Umfangsrichtung erstreckt. Beispielsweise können zwei sich über zwischen einem Viertel oder einem Drittel und weniger als einer halben Umfangserstreckung erstreckende Teilringfortsätze vorgesehen werden, wobei mindestens einer der Teilringe aus mindestens zwei von in Umfangsrichtung angeordneten Abschnitten besteht, die, wie zuvor im Zusammenhang mit dem Ringfortsatz beschrieben, entweder in Umfangsrichtung durch eine Freifläche (Aussparung) voneinander beabstandet sind oder durch einen Materialschwächungsbereich einteilig miteinander verbunden sind, wobei auch hier der Materialschwächungsbereich eine Sollbruchstelle zum definierten Aufreißen beim Radialkraftbeaufschlagen bildet.

Durch das Vorsehen von mindestens zwei in Umfangsrichtung durch einen Materialschwächungsbereich voneinander beabstandeten Abschnitten wird sichergestellt, dass die Formschlussmittel an mindestens einer Stelle, vorzugsweise an mindestens zwei in Umfangsrichtung beabstandeten Stellen aufreißen, wenn die Formschlussmittel mit einer Radialkraftkomponente beaufschlagt werden, so dass nach radial außen abkragende (Ring-)Segmente gebildet werden, die seitlich, d.h. in Richtung der ursprünglichen Axialerstreckung des Ringfortsatzes bzw. des Teilringfortsatzes Abriss- bzw. Aufrisskanten aufweisen. Eine derartige Ausgestaltung mit mindestens einem Materialschwächungsbereich in den Formschlussmitteln ist besonders bevorzugt, wenn das Verbindungselement, was in Weiterbildung der Erfindung mit Vorteil vorgesehen ist, als einstückiges Kaltfließpressteil ausgebildet ist. Ganz besonders bevorzugt wird der mindestens eine Materialschwächungsbereich durch das Vorsehen mindestens einer Kerbe realisiert. Besonders zweckmäßig ist es, wenn die ringförmigen, insbesondere kreisringförmigen oder teilringförmigen, insbesondere teilkreisförmigen Formschlussmittel eine vergleichsweise geringe Dicken-, d.h. Radialerstreckung aufweisen, um ein Aufreißen des Ringfortsatzes oder des Teilringfortsatzes bei Radialkraftbeaufschlagung im Materialschwächungsbereich zu ermöglichen.

Ganz besonders zweckmäßig ist es, wenn die Axialerstreckung, d. h. die Höhe der Formschlussmittel so gewählt ist, dass der ringförmige Fortsatz die zu hintergreifende äußere Schicht in Richtung der Axialerstreckung der Durchgangsöffnung um mindestens 1mm, vorzugsweise um mindestens 2mm oder 3mm, überragt, um somit nach dem Deformieren der Formschlussmittel, bei dem diese bevorzugt in mehrere Kreissegmente unterteilt werden, die äußere Schicht des Verbundmaterials ausreichend weit hintergreifen, insbesondere um somit eine drehfeste Verkrallung bzw. Anordnung des Verbindungselementes am Verbundmaterial sicherstellen zu können.

Um sicherzustellen, dass das Verbindungselement eine ausreichende Dickenerstreckung aufweist, um die notwendigen Kräfte aufnehmen zu können und gleichzeitig trotz einer ausreichenden Axialerstreckung bzw. Höhe des Ringfortsatzes oder des Teilringfortsatzes durch die, insbesondere kreisförmig konturierte Durchgangsöffnung hindurchgeschoben werden zu können, ist es bevorzugt, wenn das Verbindungselement, zumindest in einer die Innengewindeöffnung aufnehmenden oder benachbart zur Innengewindeöffnung lokalisierten, sich quer zur Längserstreckung des Verbindungselementes erstreckenden Schnittansicht eine Teilkreiskontur, vorzugsweise eine Halbkreiskontur aufweist. Weiter bevorzugt ist es, wenn das Verbindungselement, insbesondere aus Gründen der Materialersparnis im Bereich seiner in Längsrichtung orientierten Enden auf einer von der Anlage abgerundeten Oberseite abgeflacht ist, dass sich also die teilkreisförmige Querschnittskontur nicht bis zu den in Richtung der Längserstreckung des Verbindungselementes voneinander beabstandeten Enden erstreckt.

Besonders zweckmäßig ist eine Ausführungsvariante des Verbindungselementes, bei welcher der doppelte (Außen-)Radius des Ringfortsatzes oder der doppelte Radius des Teilringfortsatzes (etwas) geringer ist, als die Breitenerstreckung des Verbindungselementes und dass gleichzeitig die sich senkrecht zur Flächenerstreckung der Anlageseite des Verbindungselementes orientierte Axialerstreckung der Formschlussmittel so gewählt ist, dass diese nach dem Umbiegen nach radial außen die Anlageseite und damit die Längskanten des Verbindungselementes in Richtung der Breitenerstreckung des Verbindungselementes überragen, um somit eine feste Verbindung mit dem Verbundmaterial durch Hintergreifen der äußeren Schicht sicherstellen zu können.

Die Erfindung ist nicht auf die Verwendung mit Verbundmaterialien beschränkt - wesentlich ist, dass eine eine Durchgangsöffnung aufweisende Schicht, beispielsweise ein Metallblech vorgesehen wird, wobei das Verbindungselement durch die Durchgangsöffnung hindurchsteckbar und von der Rückseite durch Umbiegen der Formschlussmittel und damit Hintergreifen der Schicht festlegbar ist.

Im Hinblick auf die konkrete Anordnung der, beispielsweise bolzenartigen oder als umfangsgeschlossener Ring ausgebildeten, Formschlussmittel gibt es unterschiedliche Möglichkeiten. So können diese beispielsweise unmittelbar radial innen an den oberen Rand der Innengewindeöffnung angrenzen oder mit Radialabstand zu diesem angeordnet sein. Bevorzugt ist es, wenn die Formschlussmittel, zumindest im Bereich ihres freien Endes, mit Radialabstand zum Umfangsrand der Innengewindeöffnung angeordnet sind, um auf diese Weise mit einem Druckmittel zur Erzeugung der Radialkraftkomponente in einen Bereich radial zwischen den Formschlussmitteln und dem Umfangsrand der Innengewindeöffnung zur Erzeugung der Radialkraftkomponente zur plastischen Deformierung der Formschlussmittel nach radial außen eingreifen zu können.

Wie eingangs bereits angedeutet, ist es bevorzugt, wenn die Formschlussmittel (zusätzlich oder alternativ die Druckmittel zur Erzeugung der Radialkraftkomponente) mit einer Geometrie, beispielsweise einer Anlaufschräge oder Rundung, versehen sind, die derart ausgebildet ist, dass eine Druckkraftbeaufschlagung in axialer Richtung in eine die Deformierung verursachende Radialkraftkomponente umgewandelt wird.

Besonders günstig im Hinblick auf minimierte Herstellungskosten ist es, wenn das Verbindungselement nicht als Gussteil, sondern als Kaltfließpressteil ausgebildet ist. Hierzu muss beachtet werden, dass die Formschlussmittel eine, im Kaltfließpressverfahren realisierbare Formgebung, insbesondere eine an mindestens einem Materialschwächungsbereich aufbrechbare Ringform oder Teilringform, aufweisen.

Im Falle des Vorsehens von in Umfangsrichtung beabstandeter teilringförmiger Formschlussmittel ist es bevorzugt, wenn jedes Formschlussmittel maximal über ein Drittel oder ein Viertel der Umfangserstreckung der Innengewindeöffnung erstreckt.

Die Erfindung führt auch auf eine Verbindung aus einem wie zuvor beschrieben ausgebildeten Verbindungselement und einem eine äußere Schicht umfassenden Verbundmaterial, welches bevorzugt zusätzlich zu der mindestens einen äußeren Schicht eine innere Metallschaumschicht, insbesondere eine Aluminiumschicht aufweist. Besonders bevorzugt ist ein Verbundmaterial, bei dem die Schaumschicht zwischen zwei äußeren, vorzugsweise als massive Metallschichten ausgebildeten Schichten aufgenommen ist. Die Verbindung zeichnet sich dadurch aus, dass die Formschlussmittel des mittels seiner Anlageseite an einer äußeren Schicht anliegenden Verbindungselementes in eine Durchgangsöffnung, durch die das Verbindungselement zuvor hindurchgeführt wurde, eingreifen und im Vergleich zu einem ursprünglichen, nicht deformierten Zustand nach radial außen derart plastisch verformt sind, dass sie die äußere Schicht des Verbundmaterials hintergreifen. Die Formschlussmittel sind also zunächst, d.h. vor der Deformierung, derart angeordnet, dass sie innerhalb eines gedachten Kreises angeordnet sind, dessen Durchmesser geringer ist als der Durchmesser der Durchgangsöffnung im Verbundmaterial.

Besonders bevorzugt ist eine Ausführungsvariante der Verbindung, bei der die Formschlussmittel radial nach außen in eine Metallschaumschicht, insbesondere eine Aluminiumschaumschicht des Verbundmaterials eingreifend angeordnet sind, vorzugsweise derart, dass diese Metallschaum verdrängen, um von hinten, d.h. von der Innenseite des Verbundmaterials her, an der äußeren Schicht oder einer zur äußeren Schicht benachbarten Schicht anliegen zu können. Besonders bevorzugt ist das Verbindungselement drehfest am Verbundmaterial festgelegt.

In Weiterbildung der Erfindung ist mit Vorteil vorgesehen, dass die Verbindung über mehrere Formschlussmittel (deformierte Ringsegmente) sichergestellt wird, die ganz besonders bevorzugt aus einem ursprünglichen ringförmigen Formschlussmittel resultieren, welches durch Aufbringen der Radialkraftkomponente an mehreren in Umfangsrichtung beabstandeten Stellen aufgebrochen ist, so dass an den einzelnen, resultierenden Formschlussmitteln in Umfangsrichtung orientierte Abrisskanten gebildet sind. Grundsätzlich können zur Realisierung definierter Aufrissstellen an den ringförmigen Formschlussmitteln mindestens zwei in Umfangsrichtung beabstandete Materialschwächungsbereiche vorgesehen sein. Ganz besonders zweckmäßig ist es jedoch, wenn die Radialerstreckung, d.h. die Dickenerstreckung der ringförmigen Formschlussmittel über den Umfang nicht variiert.

Die Erfindung führt auch auf ein System zum Herstellen einer wie zuvor beschrieben ausgebildeten Verbindung. Kern des Systems ist ein Werkzeug, ein sogenanntes Durchführgelenkwerkzeug, zum Durchführen des Verbindungselementes durch eine Durchgangsöffnung in dem, vorzugsweise eine Metallschaumschicht umfassenden, Verbundmaterial. Das Durchführgelenkwerkzeug zeichnet sich, wie der Name bereits sagt, durch mindestens ein, vorzugsweise ausschließlich ein, Gelenk aus, welches es ermöglicht, das in Richtung seiner Längserstreckung durch die Durchgangsöffnung hindurchgeführte Verbindungselement auf der in Einführrichtung liegenden Seite, insbesondere der Rückseite, des Verbundmaterials zu verschwenken, vorzugsweise um 90°, so dass die Formschlusselemente in Richtung Durchgangsöffnung orientiert werden.

Besonders zweckmäßig ist es, wenn das Durchführgelenk, vorzugsweise axial verstellbare, Mittel, insbesondere Druckmittel, zum Deformieren der Formschlussmittel aufweist. Besonders bevorzugt sind die Mittel als Druckhülse ausgebildet, die axial entlang eines Einführabschnittes des Durchführgelenkwerkzeugs verstellbar angeordnet ist, um so in Einführrichtung gegen die Formschlussmittel gedrückt werden zu können, um diese in radialer Richtung nach außen zu deformieren. Mit Vorteil kann der Einführabschnitt des Werkzeugs gleichzeitig mit Zug beansprucht werden.

Bevorzugt ist das Metallschaum, insbesondere Aluminiumschaum aufweisende Verbundmaterial Teil des wie zuvor beschrieben ausgebildeten Systems.

Im Hinblick auf die konkrete Ausbildung des Durchführgelenkwerkzeugs gibt es unterschiedliche Möglichkeiten. Im einfachsten Fall handelt es sich um ein flexibles, insbesondere stabförmiges, ganz besonders bevorzugt federelastisches, an seinem freien Ende ein Außengewinde tragendes Element, das es ermöglicht, das Verbindungselement in Richtung seiner Längserstreckung durch die Durchgangsöffnung im Verbundmaterial hindurch zu stecken und zu verschwenken, vorzugsweise durch ein Zurückfedern des Durchführgelenkwerkzeugs. Bei einer alternativen Ausführungsform kann zwischen Außengewindeabschnitt und Einführ- bzw. Handhabungsabschnitt ein Schwenkgelenk, umfassend eine Schwenkachse vorgesehen werden.

Weiterhin führt die Erfindung auf ein Verfahren zur Herstellung einer wie zuvor beschrieben ausgebildeten Verbindung zwischen Verbindungselement und dem eine Durchgangsöffnung aufweisenden Verbundmaterial. Das Verfahren zeichnet sich dadurch aus, dass zunächst das Verbindungselement von einer Vorderseite des Verbundmaterials durch die Durchgangsöffnung auf eine Rückseite des Verbundmaterials geführt wird, insbesondere unter Zuhilfenahme eines Durchführgelenkwerkzeugs. Bevorzugt ist die Längserstreckung des Körpers des Verbindungselementes beim Durchführen in Einführrichtung orientiert, d.h. die Formschlussmittel weisen beim Durchführvorgang in Richtung einer inneren Umfangswand der Durchgangsöffnung. Nach dem Durchführen, also bei auf der Rückseite befindlichem Verbindungselement, wird dieses geschwenkt, insbesondere um 90°, so dass die Formschlussmittel und die Anlageseite in Richtung Verbundmaterial orientiert werden, woraufhin das Verbindungselement gegen die äußere Schicht des Verbundmaterials gezogen wird, insbesondere mittels des Durchführgelenkwerkzeugs, vorzugsweise derart, dass zum einen keine axiale Deformation, d.h. Eindellung des Verbundmaterials, resultiert und vorzugsweise derart, dass die Formschlussmittel in die Durchgangsöffnung hineinragen. Daraufhin werden die Formschlussmittel nach radial außen plastisch deformiert, derart, dass diese die äußere Schicht hintergreifen, wobei zum Deformieren vorzugsweise eine entlang eines Einführabschnittes des Durchführgelenkwerkzeugs verstellbare Druckhülse eingesetzt wird. Diese ist bevorzugt mit einem Konusrand versehen, um die Axialkraft in eine Radialkraftkomponente umzuwandeln.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine Verbindung, bestehend aus einem Aluminiumschaum-Verbundmaterial und einem Verbindungselement,
- Fig. 2:: eine perspektivische Ansicht eines Verbindungselementes,
- Fig. 3a und 3b:: zwei unterschiedliche, zum Teil geschnittene Ansichten eines alternativen Verbindungselementes,
- Fig. 4:: ein System, umfassend ein Durchführgelenkwerkzeug und ein Verbindungselement,
- Fig. 5a bis 5c:: unterschiedliche Zustandsansichten beim Herstellen einer in Fig. 1 gezeigten Verbindung,
- Fig. 6:: eine alternative Ausführungsform eines Verbindungselementes mit ringförmigen Formschlussmitteln,
- Fig. 7:: ein Verbindungselement mit radial deformierten Formschlussmitteln,
- Fig. 8:: eine mögliche alternative Ausführungsform eines Durchführgelenkwerkzeugs,
- Fig. 9a bis 9c: eine alternative Ausführungsform eines Verbindungselementes mit zwei Teilringabschnitte aufweisenden Formschlussmitteln, bei welchem Abschnitte der Formschlussmittel voneinander über Aussparungen beabstandet sind,
- Fig. 10a bis 10c: eine alternative Ausführungsform des Verbindungselementes, die im Wesentlichen der Ausführungsform gemäß den Fig. 9a bis 9c entspricht, mit dem Unterschied, dass die Abschnitte der Formschlussmittel einteilig ausgebildet und über Materialschwächungsbereiche miteinander verbunden sind, und
- Fig. 11: eine Distanzhülse zur Stabilisierung der Verbindung aus Verbundmaterial und Verbindungselement.

In den Figuren sind gleiche Elemente und Elemente mit der gleichen Funktion mit den gleichen Bezugszeichen gekennzeichnet.

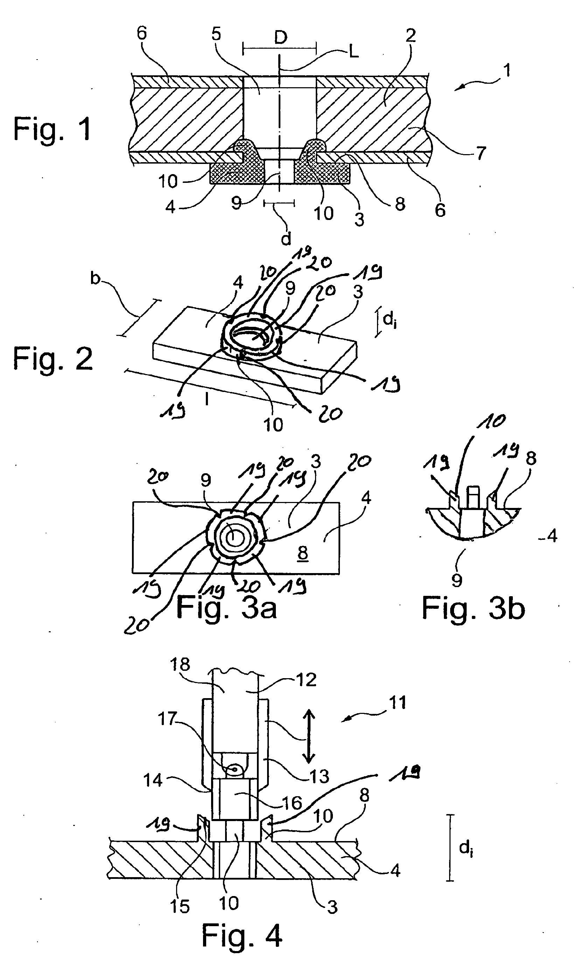

Fig. 1 zeigt eine Verbindung 1 aus einem dreischichtigen Verbundmaterial 2 (Leichtbaumaterial) und einem Verbindungselement 3, umfassend einen plattenartigen Körper 4. Das Verbindungselement 3 ist als Kaltfließpressteil ausgebildet.

Zu erkennen ist, dass das Verbundmaterial 2 mit einer Durchgangsöffnung 5 mit einem Durchmesser D versehen ist. Das Verbundmaterial 2 umfasst zwei parallele, äußere Schichten 6 aus einem massiven, metallischen Material, insbesondere Aluminium, und eine mittlere Metallschaumschicht 7, hier eine Aluminiumschaumschicht.

Zu erkennen ist, dass der Körper 4 des Verbindungselementes 3 mit einer flachen Anlageseite 8 von außen an der rückwärtigen äußeren Schicht 6 anliegt. Eine als Durchgangsöffnung ausgebildete Innengewindeöffnung 9 mit dem Durchmesser d, der kleiner ist als der Durchmesser D, ist konzentrisch zu einer Längsmittelachse der Durchgangsöffnung 5 im Verbundmaterial 2 angeordnet. Das Verbindungselement 3 ragt axial mit mehreren randseitig der Innengewindeöffnung 9 angeordneten, fortsatzartigen Formschlussmitteln 10 von der Rückseite des Verbundmaterials 2 in das Verbundmaterial 2, genauer die Durchgangsöffnung 5, hinein und überragt dabei die hintere, äußere massive Schicht 6 in axialer Richtung. Die Formschlussmittel 10 sind gegenüber einem ursprünglichen Zustand nach radial außen deformiert, so dass sie die hintere äußere Schicht 6 des Verbundmaterials 2 in radialer Richtung nach außen hintergreifen und somit in die Metallschaumschicht 7 hineinragen. Anders ausgedrückt nehmen die Formschlussmittel 10 und der Körper 4 die äußere Schicht 6 sandwichartig, klemmend zwischen sich auf, so dass das Verbindungselement 3 sicher am Verbundmaterial 2 gehalten ist. Von der Vorderseite her kann nun durch die Durchgangsöffnung 5 ein Außengewindeelement geführt und mit dem Innengewinde der Innengewindeöffnung 9 im Körper 4 des Verbindungselementes 3 verschraubt werden. Auf diese Weise ist es möglich, Gegenstände sicher an einem Metallschaum umfassenden Verbundmaterial 2 festzulegen. Das Verbindungselement 3 kann auch dazu dienen, zwei Verbundmaterialplatten aneinander zu fixieren.

Fig. 2 zeigt eine mögliche Ausführungsvariante eines Verbindungselementes 3. Zu erkennen ist die flache Anlagefläche 8 (Ablageseite), in die die Innengewindeöffnung 9 eingebracht ist. Diese ist umgeben von den Formschlussmitteln 10 zur Herstellung der in Fig. 1 gezeigten Verbindung. Die Formschlussmittel 10 sind als umfangsgeschlossener Ringfortsatz ausgebildet und erstrecken sich fortsatzartig im Wesentlichen senkrecht zur Flächenerstreckung der Anlagefläche 8 und können durch Radialkraftbeaufschlagung nach radial außen zum Hintergreifen der äußeren Schicht 6 des Verbundmaterials 3 deformiert werden. Hierzu umfassen die Formschlussmittel 10 mehrere, in dem Beispiel vier, Abschnitte 19, die bei dem Beispiel einteilig ausgebildet sind bzw. die über Materialschwächungsbereiche 20 miteinander verbunden sind. Die Materialschwächungsbereiche 20 bilden Sollbruchstellen und sind beispielsweise gebildet von in radialer Richtung eingebrachten Einkerbungen, die beispielsweise von einem Press- oder Stanzvorgang herrühren. An den Materialschwächungsbereichen reißt der Ringfortsatz bei Radialkraftbeaufschlagung definiert auf, so dass die Abschnitte 19 voneinander getrennte Ringsegmente bilden, die in radialer Richtung die äußere Schicht 6 im Innern des Verbundmaterials 2 hintergreifen.

Wesentlich ist, dass eine Längenerstreckung I des Verbindungselementes 3 größer ist als der Durchmesser D einer Durchgangsöffnung 5 gemäß Fig. 1. Wesentlich ist auch, dass die Breitenerstreckung b des Körpers 4 kleiner ist als der Durchmesser D. In dem gezeigten Ausführungsbeispiel beträgt die Dickenerstreckung dᵢ nur einen Bruchteil der Breitenerstreckung b. Zu erkennen ist auch, dass die Formschlussmittel 10 mit geringem Abstand zu den Längskanten des Verbindungselementes 3 angeordnet sind.

Fig. 3a und 3b zeigen in unterschiedlichen Ansichten ein Ausführungsbeispiel eines Verbindungselementes 3. Zu erkennen ist die Anlagefläche 8 mit sich ausgehend von dieser in den Körper 4 hinein erstreckender Innengewindeöffnung 9. Im Gegensatz zum Ausführungsbeispiel gemäß Fig. 2 ist der Körper 4 im Querschnitt näherungsweise halbkreisförmig konturiert. Insbesondere in Fig. 3a ist die im Wesentlichen hohlzylindrische Kontur der ringsatzförmigen Formschlussmittel 10 zu erkennen. Diese bestehen aus einer Anzahl, von in dem gezeigten Ausführungsbeispiel fünf, Abschnitten 19 gleich großer Umfangserstreckung, wobei jeweils zwei in Umfangsrichtung nebeneinander angeordnete Abschnitte 19 über einen Materialschwächungsbereich 20 voneinander beabstandet bzw. über diesen miteinander verbunden sind, der eine Sollbruchstelle bildet. Die Materialschwächungsbereiche 20 sind gebildet durch sich in Richtung der Hocherstreckung der Formschlussmittel 10, d.h. in Richtung der Dickenerstreckung des Verbindungselementes erstreckende Kerben, die durch Beaufschlagen der zunächst hohlzylindrischen Formschlussmittel 10 mit einer radialen Kerbkraft hergestellt sind.

Fig. 4 zeigt ein System 11 zum Herstellen einer in Fig. 1 gezeigten Verbindung. Das System umfasst ein Verbindungselement 3 sowie ein Durchführgelenkwerkzeug 12 zum Durchführen des Verbindungselementes 3 in Richtung seiner Längserstreckung durch eine Durchgangsöffnung 5 in eine Einbringrichtung und zum Verschwenken des Verbindungselementes 3 nach dem Durchführen um 90°. Ferner umfasst das Durchführgelenkwerkzeug 12 eine Druckhülse 13, die axial entlang des Durchführgelenkwerkzeuges 12 verschiebbar ist, um die Formschlussmittel 10 bei an der äußeren Schicht 6 mit der Anlageseite 8 anliegendem Verbindungselement 3 die Formschlussmittel 10 durch Beaufschlagen mit einer Axialkraft nach radial außen deformieren zu können. Zur Erzeugung der Radialkraft ist die Druckhülse 13 im vorderen Endbereich mit einer Konusfläche 14 versehen, die mit einer Anlaufschräge (Gegenkonusfläche) 15 jedes Formschlussmittels 10 zusammenwirkt. Hierzu wird die Druckhülse 13 in Einbringrichtung verstellt.

Aus Fig. 4 ergibt sich ein bevorzugter Aufbau des Durchführgelenkwerkzeuges 12. Zu erkennen ist ein vorderer Außengewindeabschnitt 16, der über ein Schwenkgelenk 17 mit einem hinteren Einführabschnitt 18 verbunden ist. Die Dimensionen sind so gewählt, dass das Verbindungselement 3 bei im Gegensatz zu der Darstellung gemäß Fig. 4 um 90° verschwenktem Einführabschnitt 18 zusammen mit dem Einführabschnitt 18 durch die Durchgangsöffnung 5 hindurchpasst.

Bevorzugt wird auf den Einführabschnitt 18, wenn die Druckhülse 13 in axialer Richtung in Richtung Verbindungselement 3 druckbeaufschlagt wird, ein Zug beaufschlagt, damit während der Deformierung der Formschlussmittel 10 der Körper 4 in Anlage an der äußeren Schicht 6 bleibt.

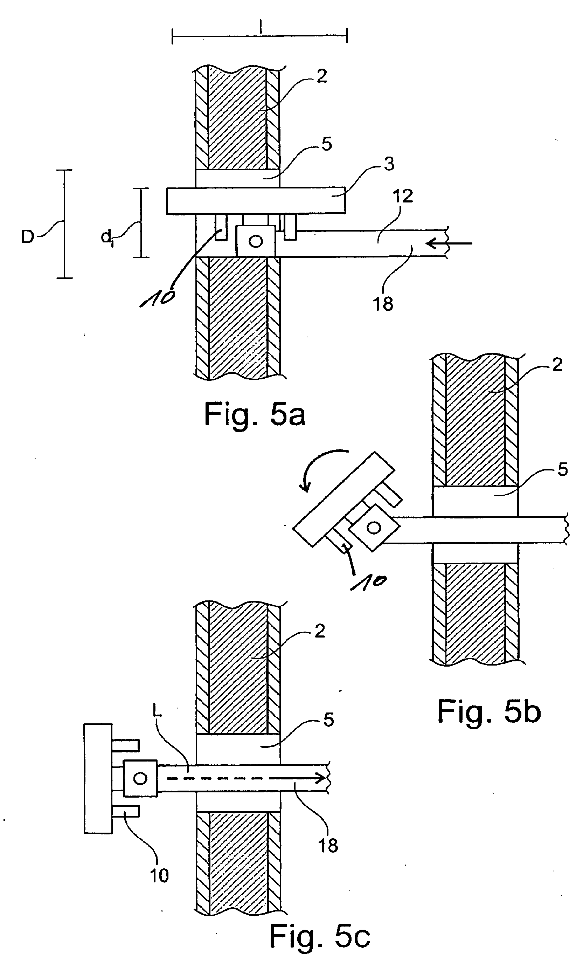

Fig. 5a bis 5c zeigen unterschiedliche Schritte bei der Herstellung einer beispielhaft in Fig. 1 dargestellten Verbindung 1. Zu erkennen ist einen Metallschaumkern aufweisendes Verbundmaterial mit Durchgangsöffnung 5. Der Einführabschnitt 18 des Durchführgelenkwerkzeugs 12 ist um 90° verschwenkt und in Richtung der Längserstreckung I des Körpers 4 des Verbindungselementes 3 orientiert. Die gemeinsame Dickenerstreckung der Verbindung aus verschwenktem Einführabschnitt 18 bzw. Durchführgelenkwerkzeug 12 und Verbindungselement 3 ist kleiner gewählt als der Durchmesser D der Durchgangsöffnung 5. Zu erkennen ist, dass das Verbindungselement 3 in Richtung seiner Längserstreckung I durch die Durchgangsöffnung 5 hindurchgeführt wird und, wie sich aus Fig. 5b ergibt, auf der Rückseite des Verbundmaterials 2 um 90° verschwenkt wird, in die in Fig. 5c gezeigte Endlage, in der die Formschlussmittel parallel zur Längsmittelachse L der Durchgangsöffnung 5 orientiert sind und in die Durchgangsöffnung 5 durch Ziehen am Einführabschnitt 18 hineingezogen werden. In einem nächsten, nicht dargestellten Schritt wird auf den Einführabschnitt 18 eine Hülse aufgeschoben oder eine bereits darauf befindliche, nicht dargestellte Hülse in Richtung Verbindungselement 3 bewegt, so dass die Druckhülse 13 die Formschlussmittel 10 zur Herstellung der in Fig. 1 schematisch gezeigten Verbindung 1 nach radial außen plastisch deformiert.

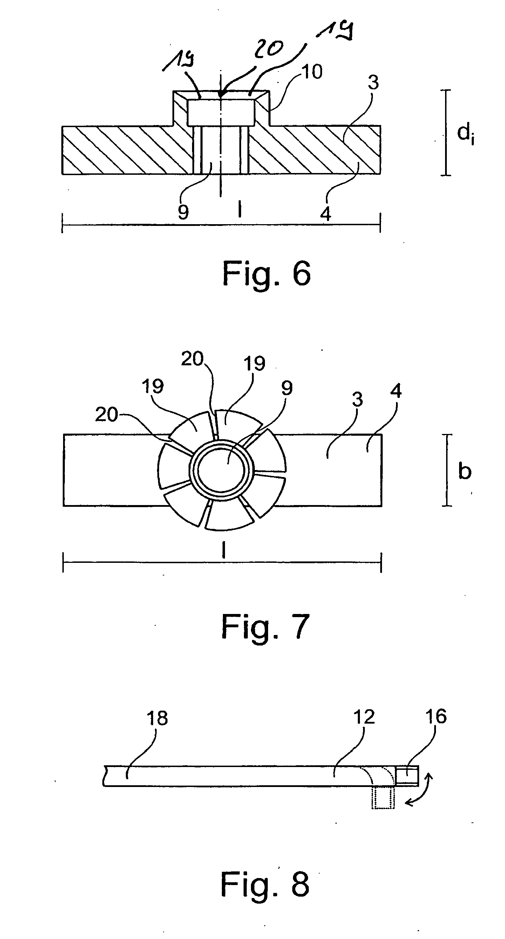

Fig. 6 offenbart eine alternative Ausführungsvariante eines Verbindungselementes, wobei die dargestellte Ansicht den in Längsrichtung geschnittenen Körper 4 zeigt. Zu erkennen ist, dass die Formschlussmittel 10 als umfangsgeschlossener Ringfortsatz ausgebildet sind, wobei sich die Radial- bzw. Dickenerstreckung des Rings mit zunehmendem Abstand zur Innengewindeöffnung 9 verjüngt. Der Außendurchmesser der ringförmigen (hier hohlkreiszylinderförmigen) Formschlussmittel 10 ändert sich über den Umfang nicht. Die Formschlussmittel 10 sind konzentrisch zu einer Längsmittelachse der Innengewindeöffnung angeordnet und derart ausgebildet, dass diese bei Radialkraftbeaufschlagung an mindestens zwei beabstandeten Stellen aufreißen, so dass sich das in Fig. 7 in einer Draufsicht dargestellte Bild ergibt. Aus den ursprünglich kreisrund konturierten Formschlussmitteln ist durch Aufbrechen an Masterialschwächungsbereichen eine Vielzahl von in Umfangsrichtung nebeneinander angeordneten, zumindest Außen voneinander beabstandeten, nach radial außen deformierten Segmenten 21 (zuvor Abschnitte 19) geworden, die jeweils zwei in Umfangsrichtung beabstandete Abrisskanten 22 aufweisen, an denen die Segmente 21 zuvor als Abschnitte 19, die ringfortsatzförmigen Formschlussmittel 10 bildend über die Materialschwächungsbereiche (Sollbruchbereiche), einstückig miteinander verbunden waren. Mit dem in den Fig. 6 und 7 dargestellten Verbindungselement 3 kann analog die in Fig. 1 gezeigte Verbindung realisiert werden. Bei dem in den Fig. 6 und 7 gezeigten Ausführungsbeispiel handelt es sich um ein Kaltfließpressteil aus Stahl.

Fig. 8 zeigt eine alternative Ausführungsform eines Durchführgelenkwerkzeugs 12 mit einem endseitigen Außengewindeabschnitt 16 und einem Einführabschnitt 18 (Handhabungsabschnitt). Der Außengewindeabschnitt 16 ist zwischen der in Volllinien dargestellten Position und der gestrichelt dargestellten Position, also um 90° durch Verbiegen reversibel verstellbar, um das Verbindungselement analog zu den Fig. 5a bis 5c durch eine Durchgangsöffnung in einem Verbundmaterial hindurchführen und hinter der Durchgangsöffnung um 90° verschwenken zu können.

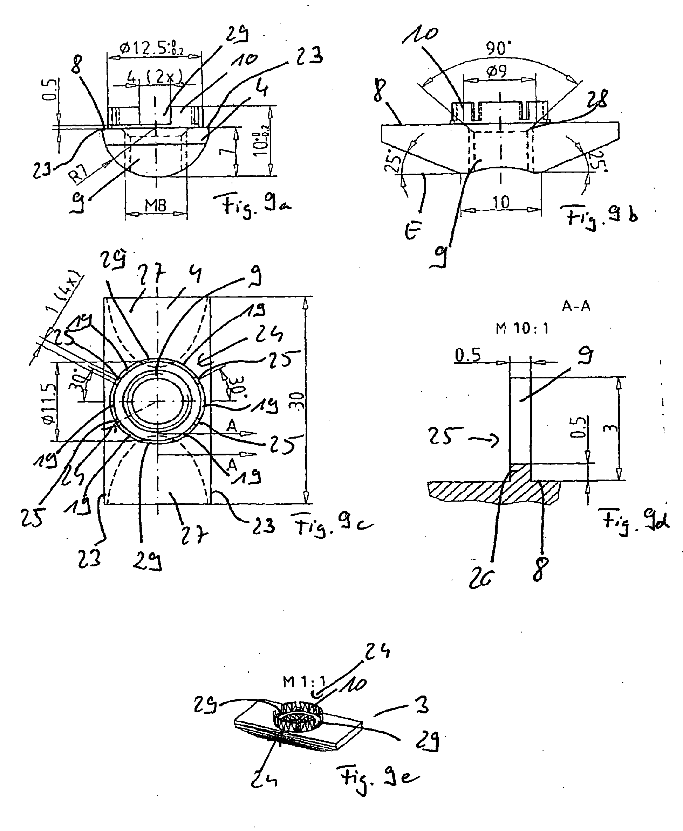

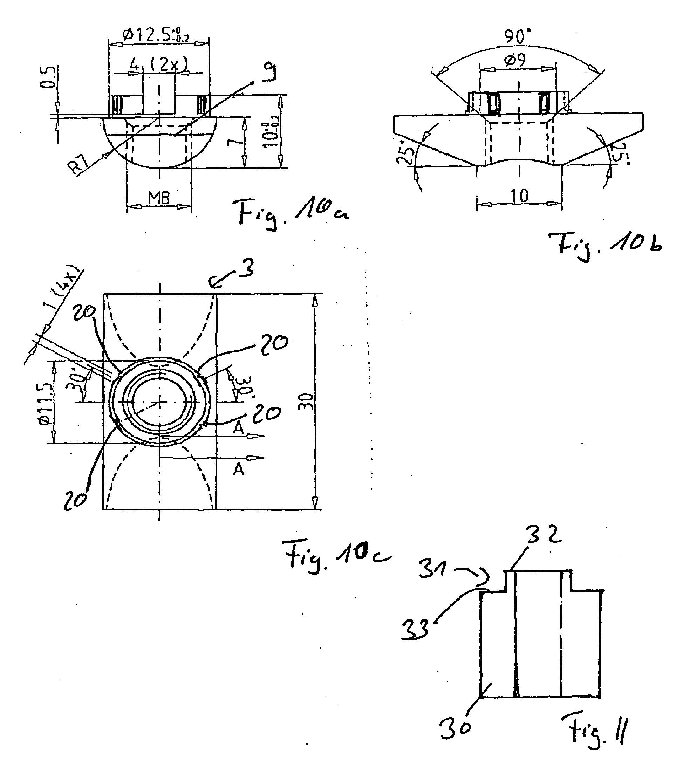

In den Fig. 9a bis 9d sind unterschiedliche, teilweise geschnittene Ansichten und Detailansichten des in Fig. 9e in einer dreidimensionalen Seitenansicht gezeigten Verbindungselementes 3 dargestellt. In den Fig. 9a bis 9e (als auch in den später noch zu erläuternden Fig. 10a bis 10c) sind bevorzugte Abmessungen angegeben, die den Schutzumfang der Erfindung jedoch nicht beschränken sollen, d.h. es können auch alternative Abmessungen gewählt werden. Jedoch sollen die Abmessungen und insbesondere sich daraus ergebende Abmessungsverhältnisse als wesentlich offenbart gelten, derart, dass die Abmessungen und insbesondere sich aus mindestens zwei der Abmessungen ergebende Abmessungsverhältnisse beanspruchbar sein sollen.

Wie sich aus Fig. 9a ergibt, umfasst der (massive) Körper 4 des als Kaltfließpressteil hergestellten Verbindungselementes 3 eine teilkreisförmige, hier kreisförmige Kontur und zwar in einer mittig durch die Innengewindeöffnung 9 verlaufenden Querschnittsansicht. Von der Anlageseite 8 her ragen Formschlussmittel 10 in Richtung der Dickenerstreckung auf, wobei die Formschlussmittel 10 mit Randabstand zu den die Anlageseite 8 begrenzenden Längskanten 23 angeordnet sind. Die in Richtung der Dickenerstreckung des Körpers 4 orientierte Axialerstreckung der Formschlussmittel 10 ist so gewählt, dass diese nach dem Umbiegen nach radial außen die Längskanten 23 überragen um eine (z.B. äußere) Schicht, insbesondere eines Verbundmaterials, oder alternativ eines einfachen Bleches zu hintergreifen.

Wie sich insbesondere aus Fig. 9e oder einer Draufsicht gemäß Fig. 9c ergibt, umfassen die Formschlussmittel 10 zwei symmetrisch ausgebildete und angeordnete in einer Draufsicht teilkreisförmige Teilringfortsätze 24, jeweils gebildet von drei in Umfangsrichtung voneinander beabstandeten, ebenfalls in Draufsicht teilkreisförmigen Abschnitten 19, die entgegen den vorstehenden Ausführungsbeispielen nicht über Materialschwächungsbereiche, sondern über Aussparungen 25 voneinander beabstandet sind. In dem konkreten Ausführungsbeispiel umfassen beide teilkreisförmige Teilringfortsätze 24 zwei derartig Aussparungen 25, deren Umfangserstreckung geringer ist als die der benachbarten Abschnitte 19, welche durch Radialkraftbeaufschlagung in radialer Richtung nach außen umlegbar sind, um ein äußeres Blech eines Verbundmaterials zu hintergreifen bzw. um Längskanten 23 (zumindest teilweise) zu überragen. Selbstverständlich kann das in den Fig. 9a bis 9e gezeigte Ausführungsbeispiel auch derart realisiert werden, dass anstelle der Aussparungen 25 Materialschwächungsbereiche vorgesehen sind, so dass die teilkreisförmigen Teilringfortsätze 24 aufreißen und Abrisskanten gebildet werden. Zu derartigen Abrisskanten kommt es bei dem in den Fig. 9a bis 9e dargestellten Ausführungsbeispiel nicht.

Aus Fig. 9d ist zu erkennen, dass die Aussparungen 25 nicht bis an die Anlageseite 8 (Anlagefläche) reichen, sondern etwas oberhalb dieser, in dem konkreten Ausführungsbeispiel 0,5mm über dieser enden. Die Höhenerstreckung der Abschnitte 19 oberhalb des in Fig. 9d gekennzeichneten Ringes 26 mit einer Höhenerstreckung von 0,5mm beträgt 2,5mm.

Aus einer Zusammenschau der Fig. 9c und 9d ergibt sich, dass sich die teilkreisförmige Konturierung der von der Anlageseite 8 abgewandten Umfangsseite des Körpers nicht bis zu den axialen, in Richtung der Längserstreckung beabstandeten Enden erstreckt, sondern lediglich in unmittelbar zur Innengewindeöffnung 9 beabstandeten Bereichen. In dazu benachbarten Endbereichen ist der Körper 4 mit jeweils einer Abflachung 27 versehen, die mit einer zur Anlageseite 8 parallelen Ebene E einen Winkel α, von beispielsweise, wie in Fig. 9b gezeigt, 25° einschließt.

Interessant ist auch das Merkmal, das als eigenständig offenbart gelten soll, dass die Innengewindeöffnung 9, wie sich aus Fig. 9b ergibt, in einen Konusabschnitt 28 ausmündet, der sich in Richtung der Formschlussmittel 10 öffnet. Dieser Konusabschnitt 28 dient als Anschlag für eine Druckhülse 13 eines Durchführgelenkwerkzeuges 12.

Ein weiteres interessantes Merkmal des Ausführungsbeispiels gemäß den Fig. 9a bis 9e ergibt sich aus einer Zusammenschau der Fig. 9a, 9c und 9e. Zu erkennen sind zwei einander gegenüberliegende, in Richtung der Längserstreckung des Verbindungselementes 3 orientierte Aufnahmeaussparungen 29 zur Aufnahme des, vorzugsweise um 90° umgelenkten Stababschnittes 18 eines Durchführgelenkwerkzeuges, um die Höhen- bzw. Dickenerstreckung der Kombination aus im Verbindungselement 3 festgelegten Durchführgelenkwerkzeug 12 und Verbindungselement 3 zu minimieren. Zu erkennen ist, dass die Umfangserstreckung der Aufnahmeaussparungen 29, von denen grundsätzlich auch nur eine einzige vorgesehen werden kann, größer ist als die Umfangserstreckung der Aussparungen 25 zum voneinander Beabstanden der Abschnitte 19. Die Aufnahmeaussparungen 29 beabstanden die beiden teilkreisförmigen Teilringfortsätze 24.

Das in den Fig. 9a bis 9e gezeigte Ausführungsbeispiel kann auch derart abgewandelt werden, dass auf die Aufnahmeaussparungen 29 verzichtet wird und dadurch nicht zwei (oder auch alternativ mehr) teilkreisförmige Teilringfortsätze 24 vorgesehen sind, sondern ein Ringfortsatz, der mehrere über Aussparungen beabstandete Abschnitte 19 aufweist.

In den Fig. 10a bis 10c ist ein alternatives Ausführungsbeispiel eines Verbindungselementes 3 gezeigt, was im Wesentlichen dem Ausführungsbeispiel gemäß Fig. 9a bis 9e entspricht, wobei zur Vermeidung von Wiederholungen im Wesentlichen auf die Unterschiede zwischen den Ausführungsbeispielen eingegangen wird. Im Hinblick auf die Gemeinsamkeiten wird auf die Fig. 9a bis 9e mit zugehöriger Figurenbeschreibung verwiesen. Der einzige Unterschied in den Ausführungsbeispielen besteht darin, dass anstelle der Aussparungen 25 zur Beabstandung der Abschnitte 19 als äußere Kerben ausgebildete Materialschwächungsbereiche 20 vorgesehen sind, an denen die Teilringfortsätze, d.h. die Formschlussmittel 10 per Beaufschlagen mit einer Radialkraftkomponente aufreißen.

Fig. 11 zeigt eine Distanzhülse 30, die eine Durchmesserreduzierung 31 aufweist. Die Durchmesserreduzierung 31 ist notwendig, damit sich die in eine Durchgangsöffnung im Verbundmaterial nach dem Festlegen des Verbindungselementes 3 einzuführende Distanzhülse mit ihrer vorderen Stirnseite 32 abstützen kann am Verbindungselement 3 in einem Bereich radial zwischen der Innengewindeöffnung 9 des Verbindungselementes 3 und den Formschlussmitteln 10, welche in einen Bereich oberhalb einer Ringschulter 33 der Distanzhülse 30 in radialer Richtung nach außen umgebogen sind. Bevorzugt ist der vordere, durchmesserreduzierte Abstand so bemessen bzw. weist eine derartige Radialerstreckung auf, dass sich die Distanzhülse 30 lediglich über die ringförmige Stirnseite 32 am Verbindungselement 3 abstützt und nicht über die Ringschulter 33. Der Durchmesser des Axialbereichs mit dem größeren Außendurchmesser entspricht bevorzugt dem Innendurchmesser durch Durchgangsöffnung abzüglich eines (vorzugsweise geringen) Spiels.

### Bezugszeichenliste

- 1: Verbindung
- 2: Verbundmaterial
- 3: Verbindungselement
- 4: Körper
- 5: Durchgangsöffnung
- 6: äußere Schicht (en)
- 7: Metallschaumschicht
- 8: Anlageseite
- 9: Innengewindeöffnung
- 10: Formschlussmittel
- 11: System
- 12: Durchführgelenkwerkzeug
- 13: Druckhülse
- 14: Konusfläche
- 15: Anlaufschräge
- 16: Außengewindeabschnitt
- 17: Schwenkgelenk
- 18: Stababschnitt
- 19: Abschnitte
- 20: Materialschwächungsbereich
- 21: Segmente
- 22: Abrisskanten
- 23: Längskante
- 24: Teilringfortsätze
- 25: Aussparungen
- 26: Ring
- 27: Abflachung
- 28: Konusabschnitt
- 29: Aufnahmeaussparung
- 30: Distanzhülse
- 31: Durchmesserreduzierung
- 32: Stirnseite
- 33: Ringschulter

- b: Breitenerstreckung
- E: Ebene

## Patentansprüche

1. Verbindungselement, insbesondere zum Festlegen an einer äußeren Schicht (6) eines, vorzugsweise eine Metallschaumschicht (7) umfassenden, Verbundmaterials (2), mit einer Anlageseite (8) zur Anlage an der äußeren Schicht (6) des Verbundmaterials (2) und mit einem eine Innengewindeöffnung (9) zum lösbaren Festlegen eines einen Einführabschnitt (18) aufweisenden Durchführgelenkwerkzeugs (12) aufweisenden Körper (4), wobei eine Längenerstreckung (I) des Körpers (4) größer ist als seine Breitenerstreckung (b) und auch größer ist als seine entlang einer Längsachse der Innengewindeöffnung (9) orientierte Dickenerstreckung (di), um durch eine Durchgangsöffnung, insbesondere in dem Verbundmaterial, in Richtung seiner Längenerstreckung (I) durchführbar zu sein, und nach Drehen um 90° einen Rand der Durchgangsöffnung an zwei Seiten zu überragen,
**dadurch gekennzeichnet,**
**dass** auf der Anlageseite (8) des Körpers (4) nach radial außen plastisch deformierbare Formschlussmittel (10) zum Hintergreifen der äußeren Schicht (6) des Verbundmaterials (2) auf der von dem Körper (4) abgewandten Seite der Schicht vorgesehen sind, und dass die Formschlussmittel (10) einen Ringfortsatz oder einen Teilringfortsatz umfassen, der mehrere in Umfangsrichtung angeordnete, durch das Beaufschlagen mit einer Radialkraftkomponente zum Hintergreifen der äußeren Schicht (6) nach radial außen umbiegbare Abschnitte (19) umfasst, die entweder in Umfangsrichtung durch mindestens eine Aussparung (19) beabstandet oder über einen Materialschwächungsbereich (20) miteinander verbunden sind, und dass in den Formschlussmitteln (10) mindestens eine Aufnahmeaussparung (29) vorgesehen ist, die zur Aufnahme des Einführabschnitts (18) des Durchführgelenkwerkzeuges ausgebildet ist.

2. Verbindungselement nach Anspruch 1,
**dadurch gekennzeichnet,**
**dass** die Längenerstreckung des, vorzugsweise in einer Draufsicht rechteckig konturierten, Verbindungselementes(3) zumindest doppelt so groß ist, wie seine Breitenerstreckung und/oder wie seine senkrecht zur Längen- und Breitenerstreckung sowie parallel zu Längserstreckung der Innengewindeöffnung (9) orientierte Dickenerstreckung.

3. Verbindungselement nach einem der Ansprüche 1 oder 2,
**dadurch gekennzeichnet,**
**dass** das Verbindungselement (3), zumindest in einer die Innengewindeöffnung (9) aufnehmenden oder benachbart zu dieser verlaufenden, Schnittansicht, eine Teilkreiskontur, vorzugsweise eine Halbkreiskontur aufweist.

4. Verbindungselement nach einem der vorhergehenden Ansprüche,
**dadurch gekennzeichnet,**
**dass** der doppelte Radius des Ringfortsatzes oder des Teilringfortsatzes geringer ist als die Breitenerstreckung (b) des Verbindungselementes (3) und dass die Axialerstreckung der Formschlussmittel (10) so gewählt ist, dass diese, zumindest zum Teil, nach dem Umbiegen nach radial außen die Anlageseite (8) in Richtung der Breitenerstreckung (b) des Verbindungselementes (3) überragen.

5. Verbindungselement nach einem der vorhergehenden Ansprüche,
**dadurch gekennzeichnet,**
**dass** die Formschlussmittel (10), insbesondere im Bereich ihrer freien Enden, mit einer eine Axialkraftbeaufschlagung in die die Formschlussmittel (10) radial deformierende Radialkraftkomponente umwandelnde Geometrie, insbesondere mit einer Anlaufschräge (15), versehen sind.

6. Verbindungselement nach einem der vorhergehenden Ansprüche,
**dadurch gekennzeichnet,**
**dass** das Verbindungselement (3) als Pressteil aus Metall, insbesondere als Kaltfließpressteil ausgebildet ist.

7. Verbindung aus einem eine äußere Schicht (6) umfassenden Verbundmaterial (2) und einem Verbindungselement (3) nach einem der vorhergehenden Ansprüche, wobei die Formschlussmittel (10) in eine, bevorzugt kreisförmig konturierte, Durchgangsöffnung (5) in dem Verbundmaterial (2) ragen, nach radial außen plastisch deformiert sind und zumindest die äußere Schicht (6) des Verbundmaterials (2) hintergreifen, wobei die Abmessungen des Verbindungselementes (3) so gewählt sind, dass dieses vor dem Festlegen am Verbundmaterial (2) durch die Durchgangsöffnung (5) durchführbar ist und in der Fixierposition die Durchgangsöffnung (5) in zwei Radialrichtungen überragt.

8. Verbindung nach Anspruch 7,
**dadurch gekennzeichnet,**
**dass** die Formschlussmittel (10) in eine Metallschaumschicht (7), insbesondere eine Aluminiumschaumschicht, des Verbundmaterials (2) eingreifend angeordnet sind.

9. Verbindung nach einem der Ansprüche 7 oder 8,
**dadurch gekennzeichnet,**
**dass** das Verbindungselement (3) drehfest am Verbundmaterial (2) festgelegt ist.

10. Verbindung nach einem der Ansprüche 7 bis 9,
**gekennzeichnet durch**,
seitliche Abrisskanten (20) an den Formschlussmitteln (10).

11. Verbindung nach einem der Ansprüche 7 bis 10,
**dadurch gekennzeichnet,**
**dass** in der Durchgangsöffnung eine eine Außendurchmesserreduzierung aufweisende Distanzhülse (30) vorgesehen ist, die vorzugsweise eine Axialerstreckung aufweist, die der Dickenerstreckung (b) des Verbundmaterials (2) entspricht.

12. System, umfassend ein Verbindungselement (3) nach einem der Ansprüche 1 bis 6 und ein Durchführgelenkwerkzeug (12) zum Durchführen des Verbindungselementes (3) durch eine Durchgangsöffnung (5) in einem Verbundmaterial (2), wobei das Durchführgelenkwerkzeug (12) ein Außengewindeabschnitt (16) zum Verschrauben mit der Innengewindeöffnung (9) des Verbindungselementes (3) aufweist, wobei der Außengewindeabschnitt (16) gelenkig, vorzugsweise um zumindest 90° abwinkelbar, mit einem, insbesondere langgestreckten, vorzugsweise stabförmigen, Einführabschnitt (18) verbunden ist.

13. System nach Anspruch 12,
**dadurch gekennzeichnet,**
**dass** an dem Durchführgelenkwerkzeug (12), vorzugsweise axial verstellbare, Mittel zum radialen Deformieren der Formschlussmittel (10) vorgesehen sind.

14. System nach einem der Ansprüche 12 oder 13, umfassend ein eine Durchgangsöffnung (5) aufweisenden Verbundmaterial (2).

## Claims

1. A connecting element, in particular for fixing to an outer layer (6) of a composite material (2) that preferably comprises a metal foam layer (7), comprising a contact side (8) for contacting the outer layer (6) of the composite material (2) and comprising a body (4) comprising an internal thread opening (9) for detachably fixing an articulated lead-through tool (12) comprising an insertion section (18), wherein the extent of length (I) of the body (4) is greater than its extent of width (b) and also greater than its extent of thickness (di) oriented along a longitudinal axis of the internal thread opening (9) in order to be able to be led through a through-opening, in particular in the composite material, in the direction of its extent of length (I), and after rotation by 90° to project beyond a boundary of the through-opening on two sides,
**characterised in that**
on the contact side (8) of the body (4) positive-locking means (10), which are plastically deformable radially towards the outside, for engaging behind the outer layer (6) of the composite material (2) on the side of the layer which side faces away from the body (4), are provided, and **in that** the positive-locking means (10) comprise a ring projection or a part-ring projection that comprises several circumferentially arranged sections (19) that can be bent over radially towards the outside as a result of impingement with a radial force component for engaging behind the outer layer (6), which sections (19) are either circumferentially spaced apart by means of at least one recess (19) or are interconnected by way of a materials weakening region (20), and **in that** in the positive-locking means (10) at least one receiving recess (29) is provided that is designed to receive the insertion section (18) of the articulated lead-through tool.

2. The connecting element according to claim 1, **characterised in that** the extent of length of the connecting element (3), which in top view preferably comprises rectangular contours, is at least twice the size of its extent of width and/or of its extent of thickness, which is oriented so as to be perpendicular to the extent of length and extent of width and parallel to the longitudinal extension of the internal thread opening (9).

3. The connecting element according to one of claims 1 or 2, **characterised in that** the connecting element (3), at least in a section view that shows the internal thread opening (9) or that extends adjacent to the aforesaid, comprises a graduated circle contour, preferably a semicircle contour.

4. The connecting element according to any one of the preceding claims, **characterised in that** twice the radius of the ring projection or of the part-ring projection is less than the extent of width (b) of the connecting element (3) and **in that** the axial extent of the positive-locking means (10) has been selected in such a manner that they, at least in part, after being bent over project radially outwards beyond the contact side (8) in the direction of the extent of width (b) of the connecting element (3).

5. The connecting element according to any one of the preceding claims, **characterised in that** the positive-locking means (10), in particular in the region of their free ends, comprise a geometry, in particular a startup slope (15), that converts an axial impingement into a radial force component which radially deforms the positive-locking means.

6. The connecting element according to any one of the preceding claims, **characterised in that** the connecting element (3) is designed as a pressed part made of metal, in particular as a cold-flow pressed part.

7. A connection made from a composite material (2) comprising an outer layer (6) and a connecting element (3) according to any one of the preceding claims, wherein the positive-locking means (10) project into a through-opening (5) in the composite material (2), which through-opening (5) preferably comprises a circular contour, wherein the positive-locking means (10) are plastically deformed radially towards the outside and engage behind at least the outer layer (6) of the composite material (2), wherein the dimensions of the connecting element (3) have been selected in such a manner that said connecting element (3) can be led through the through-opening (5) prior to being affixed to the composite material (2), and in the affixed position projects beyond the through-opening (5) in two radial directions.

8. The connection according to claim 7, **characterised in that** the positive-locking means (10) are arranged so as to engage a metal foam layer (7), in particular an aluminium foam layer, of the composite material (2).

9. The connection according to one of claims 7 or 8, **characterised in that** the connecting element (3) is non-rotationally affixed to the composite material (2).

10. The connection according to any one of claims 7 to 9, **characterised by** lateral tear-off edges (20) on the positive-locking means (10).

11. The connection according to any one of claims 7 to 10, **characterised in that** in the through-opening a spacer sleeve (30) comprising an external-diameter reducing device is provided, which spacer sleeve (30) preferably comprises an axial extent that corresponds to the extent of width (b) of the composite material (2).

12. A system comprising a connecting element (3) according to any one of claims 1 to 6 and an articulated lead-through tool (12) for leading the connecting element (3) through a through-opening (5) in a composite material (2), wherein the articulated lead-through tool (12) comprises an external thread section (16) for being screwed together with the internal thread opening (9) of the connecting element (3), wherein the external thread section (16) is connected by means of an articulated joint, preferably able to be angled by at least 90°, to an insertion section (18) that is, in particular, elongated and preferably bar-shaped.

13. The system according to claim 12, **characterised in that** on the articulated lead-through tool (12) means for radial deformation of the positive-locking means (10) are provided, which former means are preferably axially adjustable.

14. The system according to one of claims 12 or 13, comprising a composite material (2) that comprises a through-opening (5).

## Revendications

1. Élément de connexion, en particulier pour la fixation à une couche extérieure (6) d'un matériau composite (2) comprenant de préférence une couche de mousse métallique (7), comprenant un côté d'application (8) pour l'application contre la couche extérieure (6) du matériau composite (2) et comprenant un corps (4) présentant une ouverture filetée intérieure (9) pour la fixation amovible d'un outil articulé de passage (12) présentant une portion d'introduction (18), une étendue en longueur (I) du corps (4) étant supérieure à son étendue en largeur (b) et étant également supérieure à son étendue d'épaisseur (di) orientée le long d'un axe longitudinal de l'ouverture filetée intérieure (9) afin de pouvoir être guidée à travers une ouverture de passage, en particulier dans le matériau composite, dans la direction de son étendue en longueur (I), et après rotation de 90° afin de dépasser des deux côtés d'un bord de l'ouverture de passage,
**caractérisé en ce que**
des moyens d'engagement par correspondance de forme (10) déformables plastiquement radialement vers l'extérieur sont prévus sur le côté d'application (8) du corps (4) pour venir en prise par l'arrière avec la couche extérieure (6) du matériau composite (2) du côté de la couche opposé au corps (4), et **en ce que** les moyens d'engagement par correspondance de forme (10) comprennent une saillie annulaire ou une saillie partiellement annulaire qui comprend plusieurs portions (19) disposées dans la direction périphérique, pouvant être fléchies radialement vers l'extérieur par sollicitation avec une composante de force radiale en vue de venir en prise par l'arrière avec la couche extérieure (6), lesquelles portions (19) étant espacées dans la direction périphérique par au moins un évidement ou étant connectées les unes aux autres par le biais d'une région d'affaiblissement de matériau (20), et **en ce que** dans les moyens d'engagement par correspondance de forme (10) est prévu au moins un évidement de réception (29), qui est réalisé pour recevoir la portion d'introduction (18) de l'outil articulé de passage.

2. Élément de connexion selon la revendication 1,
**caractérisé en ce que** l'étendue en longueur de l'élément de connexion (3), de préférence présentant un contour rectangulaire en vue de dessus, est au moins deux fois plus grande que son étendue en largeur et/ou que son étendue d'épaisseur orientée perpendiculairement à l'étendue en longueur et à l'étendue en largeur et parallèlement à l'étendue en longueur de l'ouverture filetée intérieure (9).

3. Élément de connexion selon l'une quelconque des revendications 1 ou 2, **caractérisé en ce que** l'élément de connexion (3), au moins dans une vue en coupe incluant l'ouverture filetée intérieure (9) ou s'étendant à côté de celle-ci, présente un contour sous forme de cercle partiel, de préférence un contour sous forme de demi-cercle.

4. Élément de connexion selon l'une quelconque des revendications précédentes, **caractérisé en ce que** le double rayon de la saillie annulaire ou de la saillie partiellement annulaire est inférieur à l'étendue en largeur (b) de l'élément de connexion (3) et **en ce que** l'étendue axiale des moyens d'engagement par correspondance de forme (10) est sélectionnée de telle sorte que ceux-ci, au moins en partie, dépassent, après le cintrage, radialement vers l'extérieur au-delà du côté d'application (8) dans la direction de l'étendue en largeur (b) de l'élément de connexion (3).

5. Élément de connexion selon l'une quelconque des revendications précédentes, **caractérisé en ce que** les moyens d'engagement par correspondance de forme (10), en particulier dans la région de leurs extrémités libres, sont pourvus d'une géométrie convertissant une sollicitation de force axiale en la composante de force radiale déformant radialement les moyens d'engagement par correspondance de forme (10), notamment d'un biseau de montée (15).

6. Élément de connexion selon l'une quelconque des revendications précédentes, **caractérisé en ce que** l'élément de connexion (3) est réalisé sous forme de pièce emboutie, en particulier sous forme de pièce matricée à froid.

7. Connexion constituée d'un matériau composite (2) comprenant une couche extérieure (6) et d'un élément de connexion (3) selon l'une quelconque des revendications précédentes, les moyens d'engagement par correspondance de forme (10) pénétrant dans une ouverture de passage (5) de préférence de contour circulaire dans le matériau composite (2), étant déformés plastiquement radialement vers l'extérieur et venant en prise par l'arrière au moins avec la couche extérieure (6) du matériau composite (2), les dimensions de l'élément de connexion (3) étant choisies de telle sorte que celui-ci puisse être guidé avant sa fixation au matériau composite (2) à travers l'ouverture de passage (5) et dépasse au-delà de l'ouverture de passage (5) dans deux directions radiales dans la position de fixation.

8. Connexion selon la revendication 7, **caractérisée en ce que** les moyens d'engagement par correspondance de forme (10) sont disposés de manière à venir en prise dans une couche de mousse métallique (7), en particulier une couche de mousse d'aluminium, du matériau composite (2).

9. Connexion selon l'une quelconque des revendications 7 ou 8, **caractérisée en ce que** l'élément de connexion (3) est fixé de manière solidaire en rotation au matériau composite (2).

10. Connexion selon l'une quelconque des revendications 7 à 9, **caractérisée par** des bords de rupture latéraux (20) au niveau des moyens d'engagement par correspondance de forme (10).

11. Connexion selon l'une quelconque des revendications 7 à 10, **caractérisée en ce qu'**une douille d'espacement (30) présentant une réduction de diamètre extérieur est prévue dans l'ouverture de passage, laquelle présente de préférence une étendue axiale qui correspond à l'étendue d'épaisseur (b) du matériau composite (2).

12. Système, comprenant un élément de connexion (3) selon l'une quelconque des revendications 1 à 6, et un outil articulé de passage (12) pour guider l'élément de connexion (3) à travers une ouverture de passage (5) dans un matériau composite (2), l'outil articulé de passage (12) présentant une portion filetée extérieure (16) pour le vissage à l'ouverture filetée intérieure (9) de l'élément de connexion (3), la portion filetée extérieure (16) étant connectée de manière articulée, de préférence de manière à pouvoir être inclinée d'au moins 90°, à une portion d'introduction (18) notamment étirée en longueur, de préférence en forme de barre.

13. Système selon la revendication 12, **caractérisé en ce que** des moyens pour la déformation radiale des moyens d'engagement par correspondance de forme (10), de préférence déplaçables axialement, sont prévus au niveau de l'outil articulé de passage (12).

14. Système selon l'une quelconque des revendications 12 ou 13, comprenant un matériau composite (2) présentant une ouverture de passage (5).
